# EUROPEAN PATENT APPLICATION

(11) **EP 2 518 227 A1**
(43) Date of publication of application: **31.10.2012**
(21) Application number: 12151676.9
(22) Date of filing: 19.01.2012
(51) Int. Cl.: E03C 1/04, F16K 3/08

(54) **Tap and assembly comprising the tap**

(30) Priority: 15.03.2011 IT BS20110030
(71) Applicant: Bossini S.p.A., 25065 Lumezzane S.S. (Brescia) (IT)
(72) Inventor: Bossini, Leonardo, I-25080 Molinetto di Mazzano, Brescia (IT)
(74) Representative: Eterno, Enrico

(57) **Abstract**

A tap (1, 2) comprises a tap body (4, 6, 8), intercepting means, positioned between said portions (10, 12) so as to allow/prevent water from crossing the tap body (4, 6, 8), and an actuation device (14) of the intercepting means, rotatable in relation to the tap body (4, 6, 8) around an axis parallel to the body axis (X) between a supply configuration and a water intercepting configuration.

## Description

The present invention relates to a tap and a shower assembly comprising such tap.

The use of taps to allow/prevent the passage of water to a utility or plurality of utilities is known of.

Various types of tap exist, each suitable for specific uses and applications.

The taps sector is however in continuous evolution and the R&D efforts of manufacturers are aimed at continually reducing production costs, improving the quality standards of products and making utilisation easier by the user.

The present invention lies in the above context, setting out to provide a tap with an essential construction, extremely reduced aesthetic impact but at the same time a wide versatility of application and rapidity of use.

Such objective is achieved by a tap according to claim 1 and by an assembly according to claim 13. The dependent claims show preferred embodiments.

The object of the present invention will now be described in detail, with the help of the enclosed drawings, wherein:

- figures 1, 2 and 3 show three shower assemblies according to the present invention, in three different embodiments;

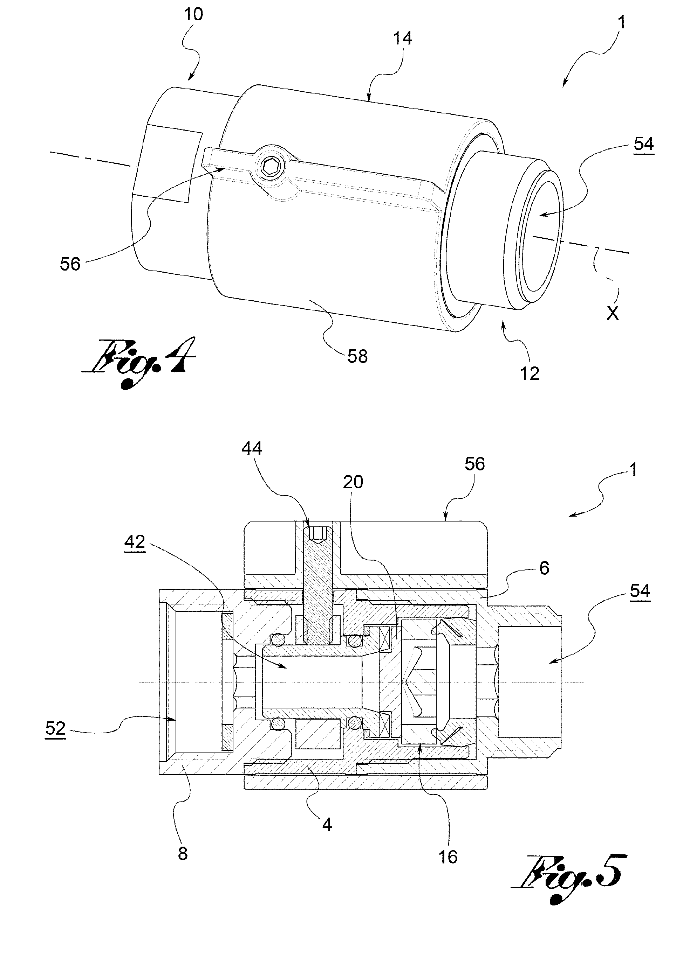

- figures 4, 5 and 6 respectively show a perspective view, a longitudinal cross-section and a view with separated parts of a tap according to the present invention, according to a first embodiment;

- figures 7a and 7b respectively show a rear and perspective view of a first component of the intercepting means used in the aforesaid tap, from the side opposite that shown in figure 6, while figure 7c shows a perspective view of a second component suitable for acting in conjunction with the first;

- figure 8, 9, 10 and 11 respectively show a perspective view, two longitudinal cross-sections along planes orthogonal to each other and a view with separated parts of a tap according to the present invention, according to a second embodiment;

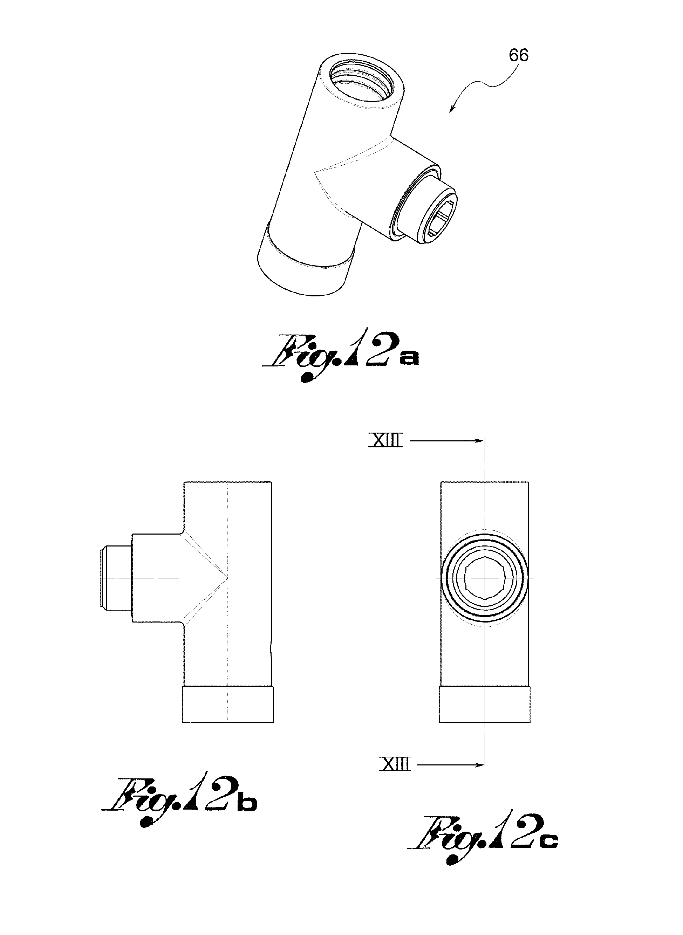

- figures 12a, 12b and 12c show three views of the deviator valve used in the assemblies of figure 1, 2 and 3;

- figures 13 and 14 show two cross-sections along the plane XIII-XIII in figure 12c, wherein the flow direction (marked by numeral 88) is schematised in the two functioning configurations of the valve;

- figures 15 and 16 show a lateral view of a deviator device and a perspective view of a cartridge used in the deviator valve in figures 13 and 14.

With reference to the aforesaid drawings, reference numerals 1 and 2 globally denote a tap 1, 2.

Such tap comprises a tap body 4, 6, 8, which extends along a body axis X and which identifies at least a fluid-entry portion 10 and at least a fluid-exit portion 12 in hydraulic communication with each other.

For the sake of clarity in the description, hereinafter the fluid will be assumed to enter from the fluid-entry portion 10 and to come out the fluid-exit portion 12; in further embodiment variants, the fluid flow is inverted, i.e. it enters from the portion 12 and exits from the portion 10.

Consequently, the tap body receives water from the fluid-entry portion 10, preferably through a deviator valve, which then comes out from the fluid-exit portion 12.

To such purpose, according to one embodiment, the fluid-entry portion 10 and the fluid-exit portion 12 respectively define an entrance aperture 52 and an exit aperture 54 which are preferably at least partially aligned along the body axis X.

According to the embodiments shown, the tap body comprises a proximal portion 4, a central portion 6 and a distal portion 8; the proximal 4 and distal portions 8 are respectively used for coupling, preferably in a releasable manner, to the supply means and the dispensing means of the water from the tap.

In the variants shown, the proximal portion 4, the central portion 6 and the distal portion 8 are composed of separate components mechanically connected to each other.

Advantageously, the tap body 4, 6, 8 extends in a tubular manner around the body axis X.

The tap 1, 2 further comprises intercepting means positioned between the fluid-entry portion 10 and the fluid-exit portion 12 so as to allow/prevent water from crossing the tap body 4, 6, 8.

Consequently, the intercepting means are suitable for reversibly obstructing the fluidic passage defined by the tap body.

The tap 1, 2 further comprises an actuation device 14 of the intercepting means, rotatable in relation to the tap body 4, 6, 8 around an axis parallel to the body axis X, preferably coinciding with such axis, between a supply configuration and a water intercepting configuration.

Consequently, when the actuation device is rotated towards the supply configuration, the intercepting means allow the passage of the water through the body; conversely, when the actuation device is positioned in the intercepting configuration, the passage of water is prevented.

In the variant shown, the actuation device 14 comprises a bush mounted coaxially onto the tap body 4, 6, 8 so as to at least partially house it.

In particular, such bush is suitable for completely containing the central portion 6, while the proximal portion 4 and the distal portion 8 project externally from the compartment 78 defined by the bush, e.g. to be more easily coupled to the supply means and dispensing means.

Preferably, the bush comprises at least one command prong 56 which extends radially from the outer surface 58 of the bush.

This way, even if the outer surface 58 of the bush should prove slippery, for example on account of wetness or soap residues, the actuation device 14 is suitable in any case for being accurately operated.

Preferably, the intercepting means comprise a first element 16, 18 integral with the tap body 4, 6, 8 and a second element 20, 22 mechanically connected to the actuation device 14; at least one between the first element 16, 18 and the second element 20, 22 defines a lumen 24', 24", 26 for the passage of water, while the other between the second element 20, 22 and the first element 16, 18 acts as obturator of said lumen 24', 24", 26, when the actuation device 14 is moved towards the intercepting configuration.

Consequently, the first and second element are reciprocally mobile, preferably rotatable, to obstruct/free the access lumen to the fluidic passage.

According to a preferred embodiment, at least the sliding surfaces 32, 34 between the first element 16 and the second element 20 are at least partially made of a ceramic material.

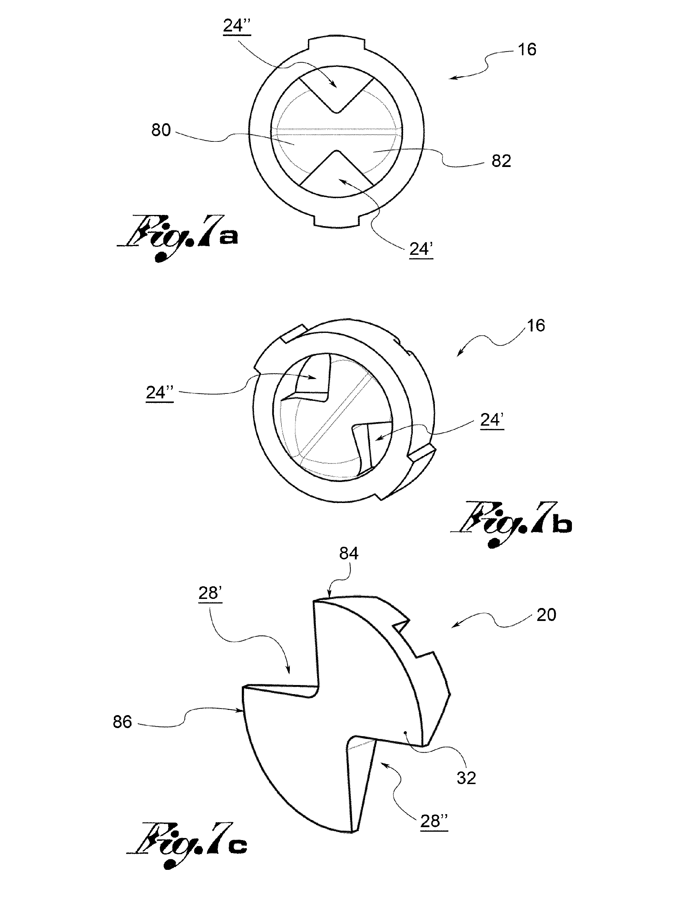

Such embodiment (for example shown in figures 7) advantageously makes it possible to avoid sealing means, such as gaskets, interposed between the elements 16, 20; the sealing means would otherwise be subject to wear.

Preferably, the first 16 and the second element consist entirely of a ceramic material.

In the embodiments shown, both the first element 16, 18 and the second element 20, 22 each define a lumen 24', 24", 26, 28', 28", 30 which, in the supply configuration, at least partially overlap.

In other words, both the aforesaid elements have an alternation of lumina and walls positioned and movable in a manner suitable for permitting/preventing the passage of water, for example circumferentially staggered.

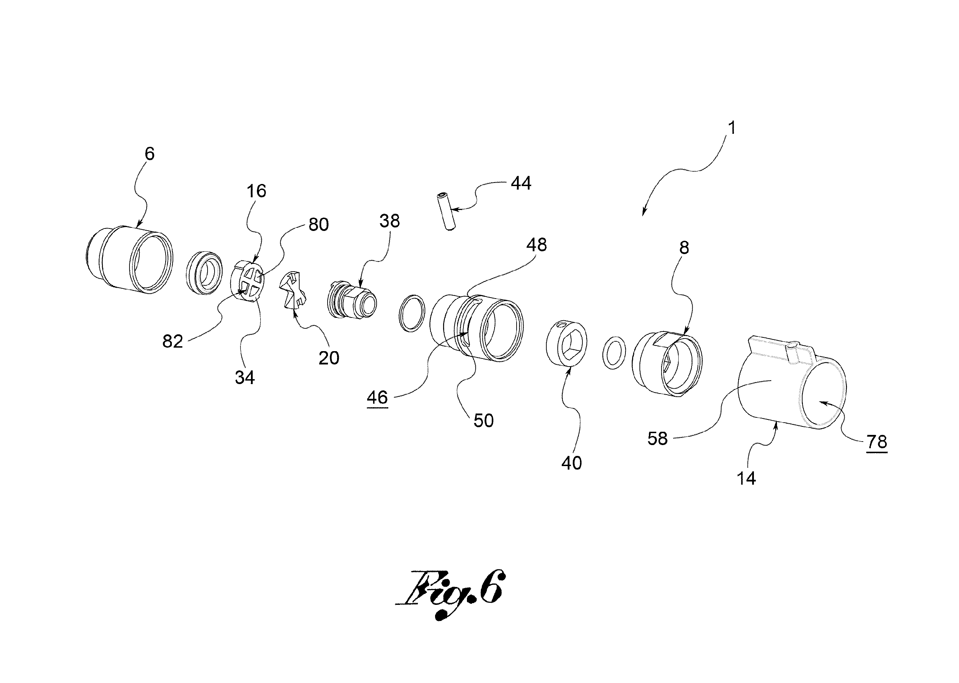

For example in the variant in figure 6, the first element 16 defines a plurality of lumina 24', 24", advantageously diametrically opposite, separated by a pair of walls 80, 82. Similarly, the second element 20 (figure 7c) is lobed so as to define the lumina 28', 28" in the recesses included between the lobes 84, 86.

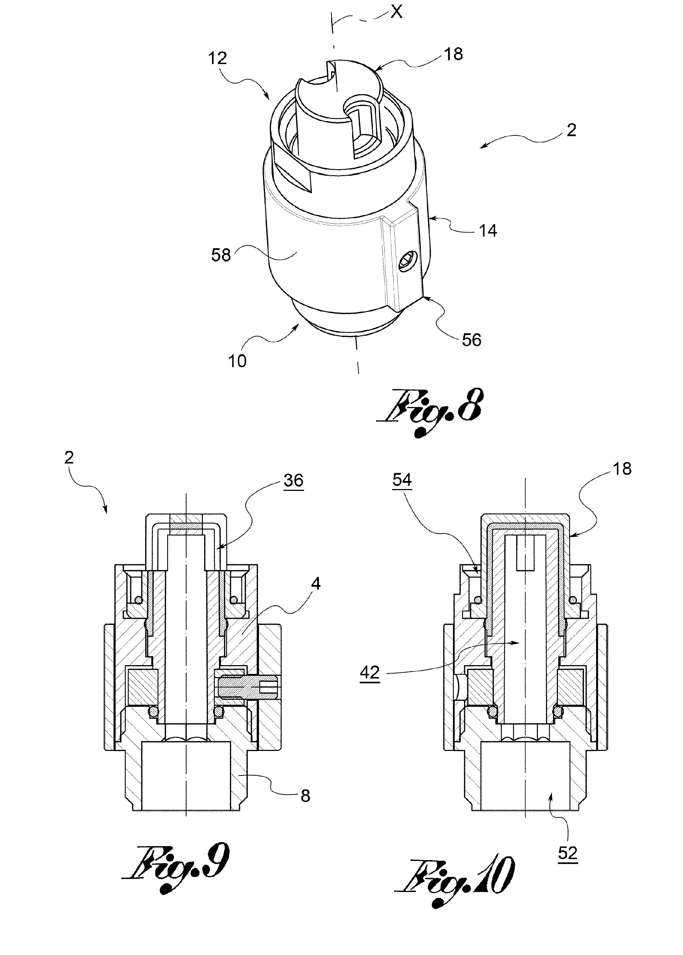

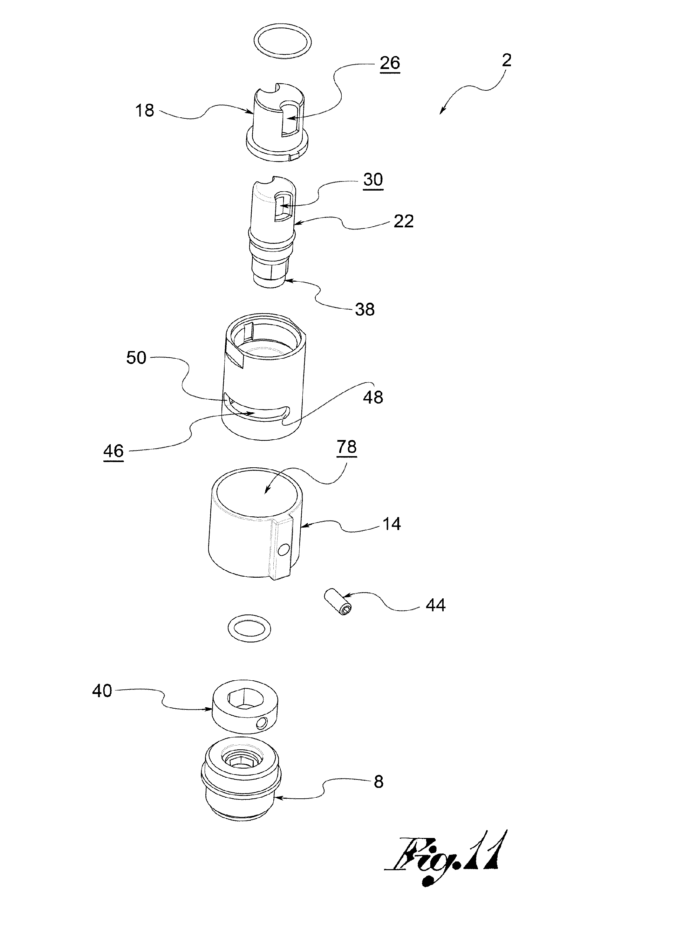

According to a further embodiment, for example shown in figures 8 and 11, the first element 18 comprises a first cap and the second element 22 comprises a second cap housed so as to rotate in the compartment 36 defined by the first cap; in such variant, the lumina of the first 18 and of the second element 22 are performed in the thickness of the caps and are oriented radially and/or axially, preferably both radially and axially.

According to a particularly advantageous variant, the element of the intercepting means which is mobile, that is to say the second element 20, 22 in the embodiments shown, is moved by means of a transmission component 38, 40 connected to the actuation device 14 and housed in a slidable manner in the tap body 4, 6, 8.

Consequently, the rotation of the actuation device by a user is transmitted to the mobile element by means of the transmission component.

According to one embodiment, the transmission component comprises a first component portion 38 suitable for being coupled to the second element 20, 22, preferably by means of a shape coupling, and a second component portion 40 engageable by a radial pin 44 the function of which will be explained later.

Preferably, the first 38 and second component portion 40 form a prismatic pair, in other words reciprocally engage so as to permit their synchronous rotation.

According to a particularly advantageous embodiment, the transmission component 38, 40 is hollow so as to create a fluidic passage 42 between the fluid-entry portion 10 and the fluid-exit portion 12.

Preferably, the transmission component 38, 40 is coupled to the actuation device 14 by means of a radial pin 44 crossing the thickness of the tap body 4, 6, 8.

Consequently, the radial pin makes the transmission component and the actuation device integral in rotation, so that the latter is rotatable externally to the tap body, while the former is movable inside said body.

In the variant shown, the radial pin 44 is housed inside the command prong 56, preferably in such a manner that the head of such pin is accessible from the outside, for example by means of a tool.

Preferably, the tap body 4 defines a circumferential slot 46 for housing the radial pin 44 in a slideable manner.

Advantageously, the edges 48, 50 which define such slot 46 are reciprocally positioned at such a distance as to limit the circumferential stroke of the actuation device 14.

In other words, the aforesaid edges act as end-stroke means for the movement of the actuation device; in fact, e.g. with reference to figure 6, when the pin 44 abuts with the edge 48 a further clockwise rotation of the actuation device is substantially prevented.

The present invention also relates to a shower assembly 60 comprising a main shower head 62, preferably fixed (inasmuch as connected to a fixed arm), a hand-held shower head 64 and a pressure-sensitive deviator valve 66 to deviate a water supply flow towards the main shower head 62 or towards the hand-held shower head 64.

Consequently, the deviator valve 66 is suitable for channelling the water flow coming from the supply means towards only one of the aforesaid shower heads depending on the pressure perceived in its branches 68, 70.

Preferably, unlike the main shower head 62, the hand-held shower head 64 can be gripped and is supplied by a flexible hose.

The assembly 60 comprises at least one tap 1, 2 according to any of the previous embodiments, operatively connected to the hand-held shower head 64 or to the main shower head 62.

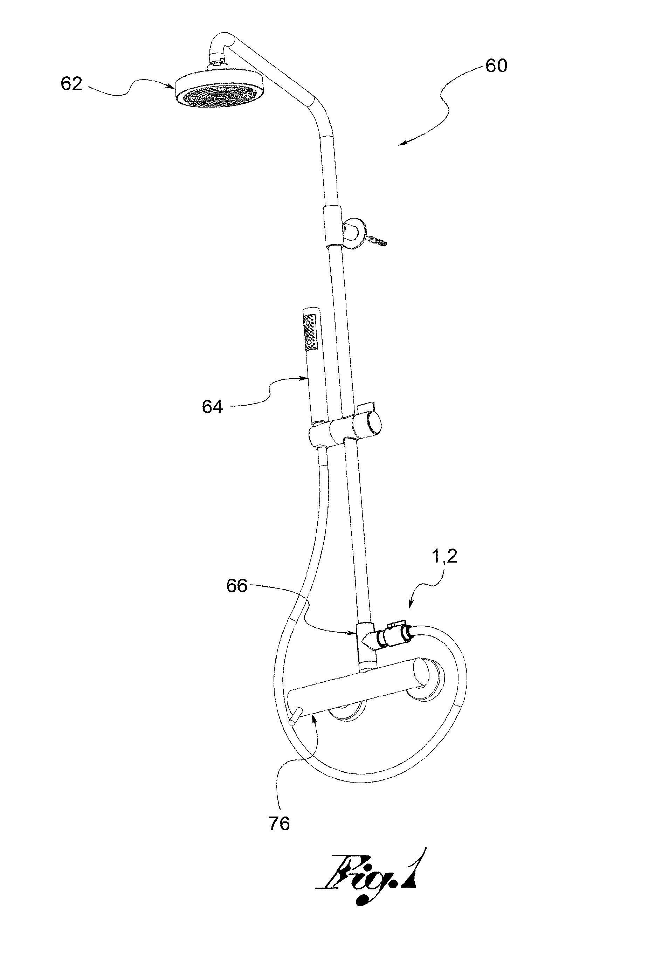

For example in the embodiment of figure 1, the fluid-entry portion 10 of the tap 1, 2 is connected directly to the deviator valve, while the fluid-exit portion 12 supplies the hand held shower head 64.

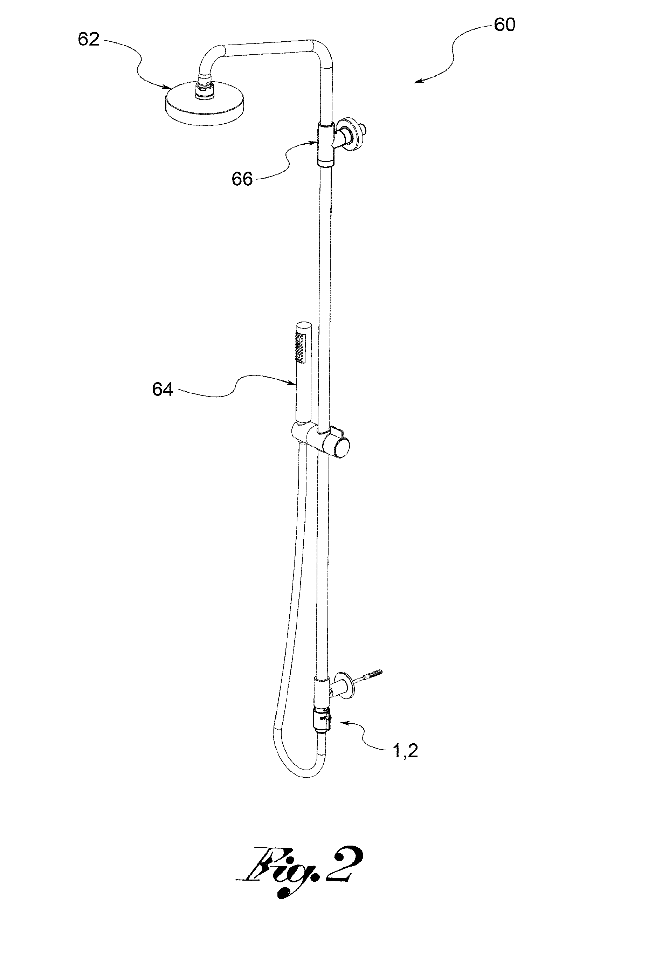

According to a further variant (figure 2), the fluid-entry portion 10 of the tap 1, 2 is connected to the deviator valve by means of a duct section, while the fluid-exit portion 12 supplies the hand held shower head 64.

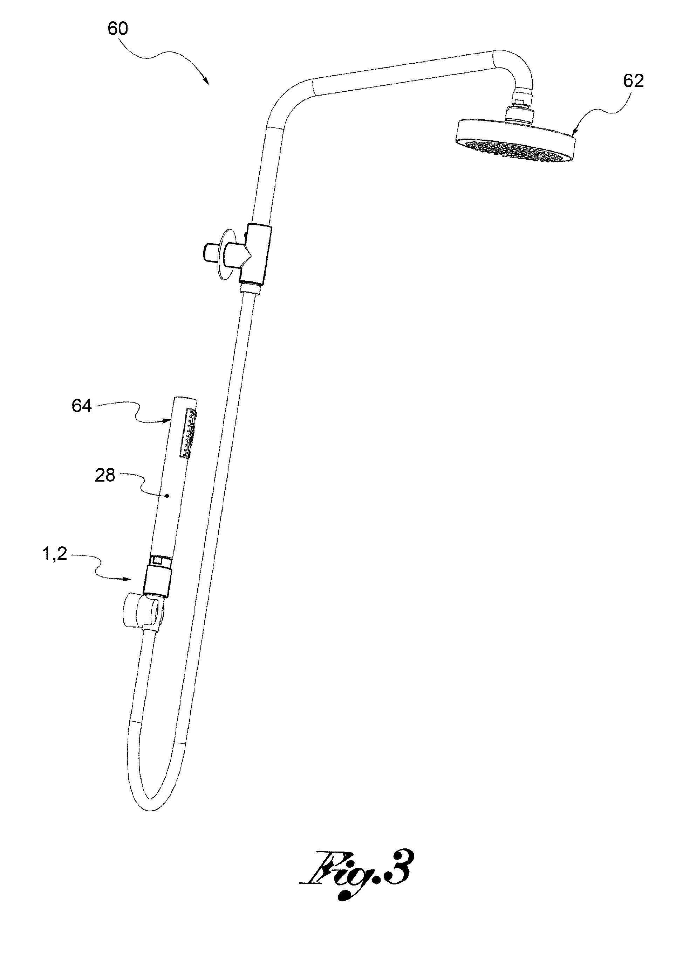

According to yet a further embodiment (figure 3), the fluid-entry portion 10 of the tap 1, 2 is connected to the deviator valve by means of a flexible hose, while the fluid-exit portion 12 is connected in an integral manner to the body 98 of the hand held shower head 64.

When the actuation device 14 of the tap 1, 2 is moved to the water intercepting configuration, that is when the passage of water through the tap body is prevented, the deviator valve 66 directs the supply flow respectively towards the main shower head 62 or towards the hand-held shower head 64.

In other words, in an arrangement in which the tap 1, 2 is connected to the hand held shower head 64 and in which the actuation device 14 is in the water intercepting configuration, the deviator valve 66 directs the supply flow towards the main shower head 62, the fluidic passage to which is not obstructed by the tap.

Conversely, in an arrangement in which the tap 1, 2 is connected to the main shower head 62 and in which the actuation device 14 is in the water intercepting configuration, the deviator valve 66 will direct the supply flow towards the hand held shower head 64.

According to a preferred embodiment, the deviator valve 66 comprises a first supply branch 68 for the main shower head 62, a second supply branch 70 for the hand-held shower head 64 and a deviator body 72, mobile in a seat 74 situated between said branches 68, 70 depending on the water pressure perceived in the supply branch 70 bearing the tap 1, 2.

According to the embodiments shown, the deviator device 72 extends from a base portion 96 along an extension direction Y; preferably, the base portion 96 extends radially outwards in relation to the remaining portion of the deviator device 72.

According to one variant, the seat 74 for such device is defined by a cartridge 92, which determines the axial stroke of the deviator device 72.

In fact, in the assembled configuration of the valve, the deviator device 72 is axially mobile inside the cartridge 92, mounted coaxially onto the deviator device.

Preferably, the cartridge 92 defines at least one perimetral channel 94 at the seat 74, preferably a plurality of such channels distributed circumferentially, positioned radially outwards in relation to the base 96.

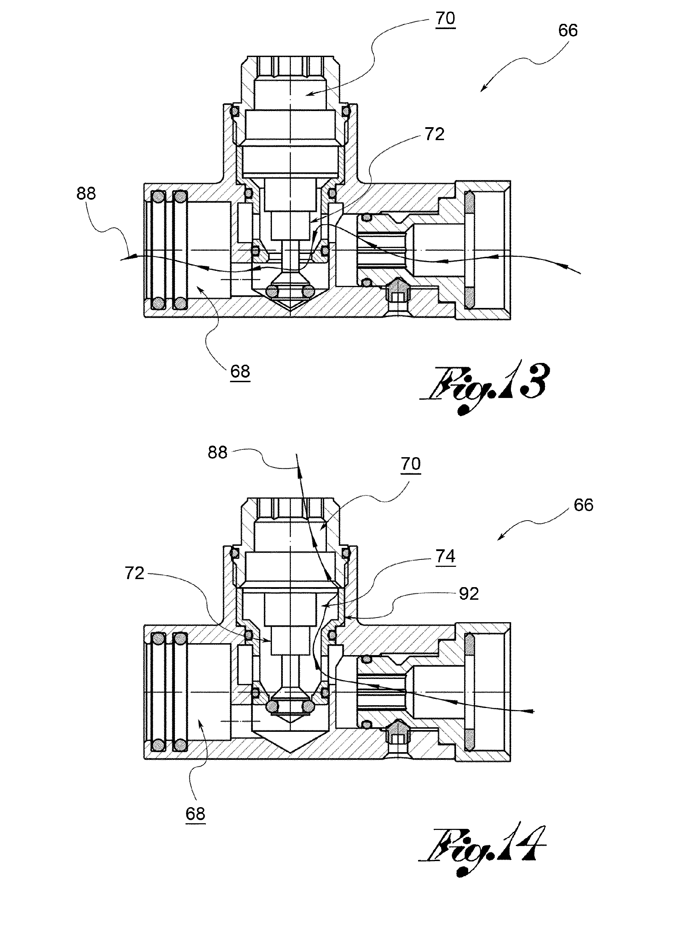

Going back to the examples mentioned earlier (tap connected to the hand held shower head; figure 1), in a first configuration the actuation device is positioned in the supply configuration and the water (represented by the arrow 88 in figure 14) passes into the supply branch 70.

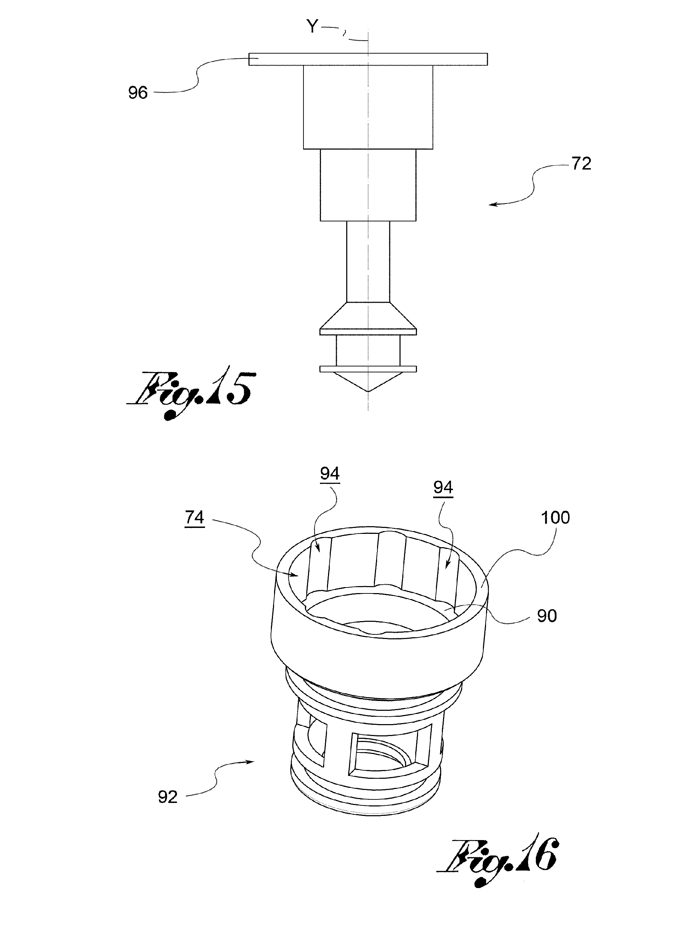

In this configuration, the deviator device 72 is in a rearward position in relation to an abutment wall 90 defined by the cartridge 92. As may be seen in figure 16, in the rearward position, the perimetral channel 94 is open in that an opening is present between the base portion 96 and the cartridge wall 100 defining such channel.

Consequently, the water passes from the supply means in the supply branch 70, beyond the deviator device 72 through the perimetral channels 94, to come out of the hand held shower head 64.

In a second configuration (figure 13), the actuation device is positioned in the water intercepting configuration, so that the water (represented by the arrow 88) passes into the first supply branch 68.

In fact, in this configuration, the base portion 96 of the deviator device 72 is in the forward position, that is to say in contact with the abutment wall 90 of the cartridge 92, since the pressure which has risen in the second supply branch 70 has moved such device to close such branch.

By virtue of the contact between the base 96 and the abutment wall 90, the plurality of perimetral channels 94 is excluded from the passage of the water. Consequently, the water will pass from the supply means in the first supply branch 68 towards the main shower head 62.

According to yet a further variant, the assembly 60 comprises a mains tap 76 to enable/prevent the supply of water to the deviator valve 66.

Consequently, while the tap 1, 2 and the deviator valve are responsible for supplying water from the main shower head or from the hand held shower head, the mains tap 76 is responsible for interrupting the fluidic connection between the water supply and the deviator valve.

A person skilled in the art may make variations or replacements of elements with others functionally equivalent to the aforementioned embodiments of the tap and of the assembly so as to satisfy specific requirements.

Such variations are also included within the scope of protection as defined by the following claims.

Moreover, each variant described as belonging to a possible embodiment may be realised independently of the other variants described.

## Claims

1. Tap (1, 2) comprising:
- a tap body (4, 6, 8), which extends along a body axis (X) and which identifies at least a fluid-entry portion (10) and at least a fluid-exit portion (12) in hydraulic communication with each other;
- intercepting means, positioned between said portions (10, 12) so as to allow/prevent water from traversing the tap body (4, 6, 8);
- an actuation device (14) of the intercepting means, rotatable in relation to the tap body (4, 6, 8) around an axis parallel to the body axis (X) between a supply configuration and an intercepting configuration of the water.

2. Tap according to claim 1, wherein the intercepting means comprise a first element (16, 18) integral with the tap body (4, 6, 8) and a second element (20, 22) mechanically connected to the actuation device (14), where one between the first element (16, 18) and the second element (20, 22) defines a lumen (24', 24", 26) for the passage of water, and wherein the other between the second element(20, 22) and the first element (16, 18) acts as obturator of said lumen (24', 24", 26), when the actuation device (14) is moved towards the intercepting configuration.

3. Tap according to claim 2, wherein the first element (16, 18) and the second element (20, 22) are rotatable in relation to each other.

4. Tap according to claim 2 or 3, wherein at least the sliding surfaces (32, 34) between the first element (16) and the second element (20) are at least partially made of a ceramic material.

5. Tap according to any of the claims from 2 to 4, wherein both the first element (16, 18) and the second element (20, 22) each define a lumen (24', 24", 26, 28', 28", 30) which, in the supply configuration, at least partially overlap.

6. Tap according to claim 5, wherein the first element (18) comprises a first cap and the second element (22) comprises a second cap housed so as to rotate in the compartment (36) of the first cap, and where the lumina of the first (18) and second (22) element are radially and/or axially oriented.

7. Tap according to any of the claims from 2 to 6, wherein the mobile element (20, 22) is moved by means of a transmission component (38, 40) connected to the actuation device (14) and housed in a slidable manner in the tap body (4, 6, 8).

8. Tap according to claim 7, wherein the transmission component (38, 40) is hollow so as to create a fluidic passage (42) between the fluid-entry portion (10) and the fluid-exit portion (12).

9. Tap according to claim 7 or 8, wherein the transmission component (38, 40) is coupled to the actuation device (14) by a radial pin (44) crossing the thickness of the tap body (4, 6, 8).

10. Tap according to any of the claims from 7 to 9, wherein the tap body (4) defines a circumferential slot (46) for housing the radial pin (44), and wherein the edges (48, 50) which define such slot (46) are reciprocally positioned at such a distance as to limit the stroke of the actuation device (14).

11. Tap according to any of the previous claims, wherein the actuation device (14) comprises a bush mounted coaxially onto the tap body (4, 6, 8) so as to at least partially house it.

12. Tap according to claim 11, wherein the bush comprises at least one command prong (56), which extends radially from the outer surface (58) of the bush.

13. Shower assembly (60) comprising:
- a main shower head (62);
- a hand-held shower head (64);
- a pressure-sensitive deviator valve (66) to deviate a water supply flow towards the main shower head (62) or towards the hand-held shower head (64);
- at least one tap (1, 2), according to any of the previous claims, operatively connected to the hand-held shower head (64) or to the main shower head (62); wherein, when the actuation device (14) of the tap (1, 2) is moved to the water intercepting configuration, the deviator valve (66) directs the supply flow respectively towards the main shower head (62) or towards the hand-held shower head (64).

14. Assembly according to claim 13, wherein the deviator valve (66) comprises a first supply branch (68) for the main shower head (62), a second supply branch (70) for the hand-held shower head (64) and a deviator body (72) mobile in a seat (74) situated between said branches (68, 70) depending on the water pressure perceived in the supply branch (70) bearing the tap (1, 2).

15. Assembly according to claim 13 or 14, comprising a mains tap (76) to enable/prevent the supply of water to the deviator valve (66).

16. Assembly according to any of the claims from 13 to 15, wherein the hand-held shower head (64) is suitable for being gripped and is supplied by a flexible hose.
